# EUROPEAN PATENT SPECIFICATION

(11) **EP 0 772 271 B1**
(45) Date of publication and mention of the grant of the patent: **26.10.2005**
(21) Application number: 96650049.8
(22) Date of filing: 04.11.1996
(51) Int. Cl.: H02G 3/06

(54) **A cable duct**
Kabelkanal
Conduite pour câbles

(30) Priority: 03.11.1995 IE 950850
(43) Date of publication of application: 07.05.1997
(73) Proprietor: Carson-Brooks Plastics Limited, Roscommon,County Roscommon (IE)
(72) Inventor: Kelly, Michael, Roscommon, County Roscommon (IE); Howard, David, Lucan, County Dublin (IE); Hood, Oliver, Ballsbridge, Dublin 4 (IE)
(74) Representative: Schütte, Gearoid

(56) References cited:
- DE-A- 2 124 163
- DE-U- 7 015 776
- DE-U- 8 605 355

## Description

This invention relates to a cable duct.

The invention particularly relates to a cable duct for use in the installation of track-side signalling, fibre optic and telecommunications cable systems for railway and light railway projects.

DE-U7015776 discloses a rail element for guiding and mounting a cable clip.

Cable ducts in precast concrete material are widely used for housing cabling alongside railway tracks. The inherent weight of concrete ducts makes them relatively difficult and cumbersome to handle and time consuming to lay.

The present invention is directed towards overcoming this problem and providing an improved cable duct.

According to the invention, there is provided a cable duct having a base with upstanding side walls at opposite sides of the base forming with the base an open ended channel for reception of cables, and means at each end of the duct for interlocking the duct with another duct end to end to form an extended channel for cables or the like, expansion means being provided to facilitate longitudinal expansion of adjacent ducts when interlocked end to end, the expansion means including complimentary inter-engagable formations at each end of the duct, the associated formations on a pair of ducts overlapping upon interlocking of said pair of ducts to prevent ingress of material into the ducts. Preferably, the duct is formed of a structural foam plastics materials resulting in a light weight duct of good strength. Thus advantageously, the duct can be laid in a relatively easy and rapid fashion.

In one embodiment means is provided to prevent relative vertical movement between a pair of interlocked ducts. Conveniently said means comprises complementary interengagable formations at each end of the duct which engage when a pair of ducts are interlocked.

Conveniently the expansion means comprises at each end of the duct a curved flange on one side wall and an associated curved housing on the other side wall, the flange of one duct being rotatable engagable within the housing on an adjacent duct when interlocking the ducts.

In a further embodiment, mounting means is provided on the duct for mounting the duct on one or more support posts.

Preferably the mounting means comprises one or more post-engaging sockets on the duct. Conveniently each socket is vertically disposed on a side wall of the duct having a downwardly open inlet.

In a further embodiment an outwardly extending shoe is provided at a lower end of each side wall for keying the duct into a foundation material. Preferably an upper face of the shoe slopes upwardly and outwardly from the side wall.

In another embodiment a number of spaced-apart upstanding ribs are provided extending outwardly from each side wall and upwardly from the shoe.

In another embodiment, the duct interlocking means is releasably inter-engagable with a complementary interlocking means on another duct.

In a particularly preferred embodiment, the interlocking means comprises a curved finger at each end of the duct, each finger for hooking engagement with a complementary finger on another duct.

Preferably, means is provided to prevent relative vertical movement between a pair of interlocked ducts. Conveniently, said means comprises a tongue associated with each finger, the tongue spaced-apart from the finger and vertically displaced relative to the finger so that when a pair of fingers interlock a tongue associated with one of the fingers engages beneath the other finger.

In another embodiment the duct interlocking means is of two-part construction comprising a male connector which is releasably engagable with a complimentary female receiver, one of said parts being provided at each end of the duct.

Conveniently, the male part comprises a bulbus head connected to the base by a narrow neck and the female receiver comprises a re-entrant slot in the base.

In another embodiment the means to prevent relative vertical movement between a pair of interlocked ducts comprises complimentary inter-engagable formations on the male and female parts.

Preferably, a number of spaced-apart upstanding ribs are provided extending outwardly from each side wall and upwardly from the shoe. These ribs advantageously provide strengthening and also assist in the positive location of the duct within a foundation material resisting movement of the duct within the foundation material.

In another embodiment, the side walls are of hollow construction comprising inner and outer walls interconnected by internal ribs. The ribs strengthen the side walls and also facilitate the flow of plastics material in a mould when forming the duct.

In a further embodiment, hanger means is provided on the duct for suspending the duct on a wall, embankment or the like.

Conveniently, the duct has a number of spaced-apart knock-out panels, each panel being removable for through passage of cables into or out of the duct.

In a preferred embodiment, the base has a water drain channel in a top surface of the base. Preferably, the water drain channel extends between opposite ends of the base.

In another embodiment, a shoulder is formed at a top end of each side wall for reception of a cover engagable between the side walls to close the duct.

In a particularly preferred embodiment, the shoulder has an outwardly and downwardly sloping upper surface to facilitate water run-off.

In a further embodiment, a hinge mount is formed at an upper end of one or both side walls for hingedly mounting the cover on the side walls. Conveniently, the hinge mount is integrally formed with the post mounting means.

In another embodiment, the cover has a top with a downwardly depending peripheral rim and ribs on an underside of the top located within the rim.

Preferably, a top surface of the cover has an anti-slip surface. The anti-slip surface is preferably formed by a plurality of upstanding spaced-apart projections on the top surface.

In a particularly preferred embodiment, one or more water drainage slots are provided at an edge of the top surface.

In another embodiment, one or more hinge pins are provided at an edge of the cover for engagement with the hinge mount on the duct.

If desired, locking means may be provided for releasably securing the cover on the duct.

In another embodiment the expansion means comprises complimentary inter-engagable formations at each end of the duct, the formations projecting outwardly of at least one end of the duct so that the associated formations on a pair of ducts overlap upon interlocking of said ducts to prevent ingress of material into the ducts, the cover for the duct also being provided with overlapping expansion formations at each end of the cover for overlapping engagement with adjacent covers.

In another aspect, the invention provides an interlocking device for ducts as herein described.

The invention will be more clearly understood by the following description of some embodiments thereof, given by way of example only, with reference to the accompanying drawings, in which:-
Fig. 1 is an exploded perspective view of a cable duct according to the invention;
Fig. 2 is a detail perspective view showing one end of the duct;
Fig. 3 is a detail perspective view showing an end of the duct;
Fig. 4 is a detail plan view showing the end of the duct;
Fig. 5 is a perspective view of the duct shown mounted on support posts;
Fig. 6 is a plan view of another duct;
Fig. 7 is an elevational view of a divider panel for use with the duct of Fig. 6;
Fig. 8 is an underneath plan view of the duct of Fig. 6;
Fig. 9 is a partially sectioned elevational view of the duct of Fig. 6;
Fig. 10 is an end elevational view of the duct of Fig. 6;
Fig. 11 is an end elevational view of the duct of Fig. 6 illustrating interconnection of a pair of ducts;
Fig. 12 is a sectional view taken along the line XII-XII of Fig. 6;
Fig. 13 is a sectional view taken along the line XIII-XIII of Fig. 6;
Fig. 14 is a detail sectional view taken along the line XIV-XIV of Fig. 6;
Fig. 15 is a plan view of a cover for the ducts;
Fig. 16 is an end elevational view of the cover;
Fig. 17 is a side, partially sectioned, elevational view of the cover;
Fig. 18 is an underneath plan view of the cover;
Fig. 19 is a sectional view taken along the line XIX-XIX of Fig. 18;
Fig. 20 is a sectional view taken along the line XX-XX of Fig. 18;
Fig. 21 is a sectional view taken along the line XXI-XXI of Fig. 18;
Fig. 22 is an exploded perspective view of another duct;
Fig. 23 is a perspective view of a T-junction duct according to the invention;
Fig. 24 is a plan view of another duct;
Fig. 25 is an underneath plan view of the duct of Fig. 24;
Fig. 26 is a sectional view taken along the line XXVI-XXVI of Fig. 24;
Fig. 27 is a sectional view taken along the line XXVII-XXVII of Fig. 24;
Fig. 28 is a sectional view taken along the line XXVIII-XXVIII of Fig. 24;
Fig. 29 is a sectional view taken along the line XXIX-XXIX of Fig. 24;
Fig. 30 is an end elevational view of the duct of Fig. 24, showing a male end of the duct;
Fig. 31 is an end elevational view of the duct of Fig. 24, showing a female end of the duct;
Fig. 32 is a detail view of portion of the duct of Fig. 24; and
Fig. 33 is a detail view of portion of the duct of Fig. 24.

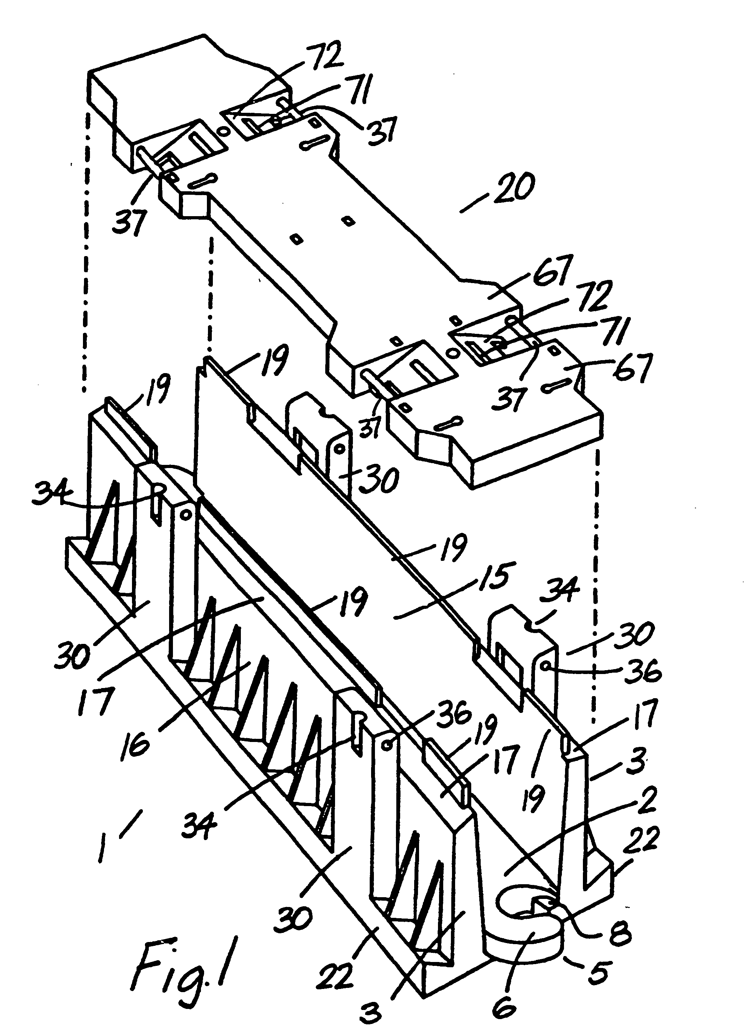

Referring to the drawings, and initially to Figs. 1 to 5 thereof, there is illustrated a cable duct according to the invention indicated generally by the reference numeral 1. The duct 1 is formed from plastics material using a structural foam injection moulding process which incorporates injecting nitrogen gas into the melt at the moulding stage. This results in an aerated bubble/honeycomb structure in the wall section which combines light weight and high strength in the duct.

The duct 1 has a base 2 with upstanding side walls 3 at opposite sides of the base 2 forming with the base 2 an open ended channel for reception of cables. A duct interlocking device 5 is provided at each end of the duct 1 at the base 2 for interlocking the duct 1 with another duct 1 end to end to form an extended channel for cables.

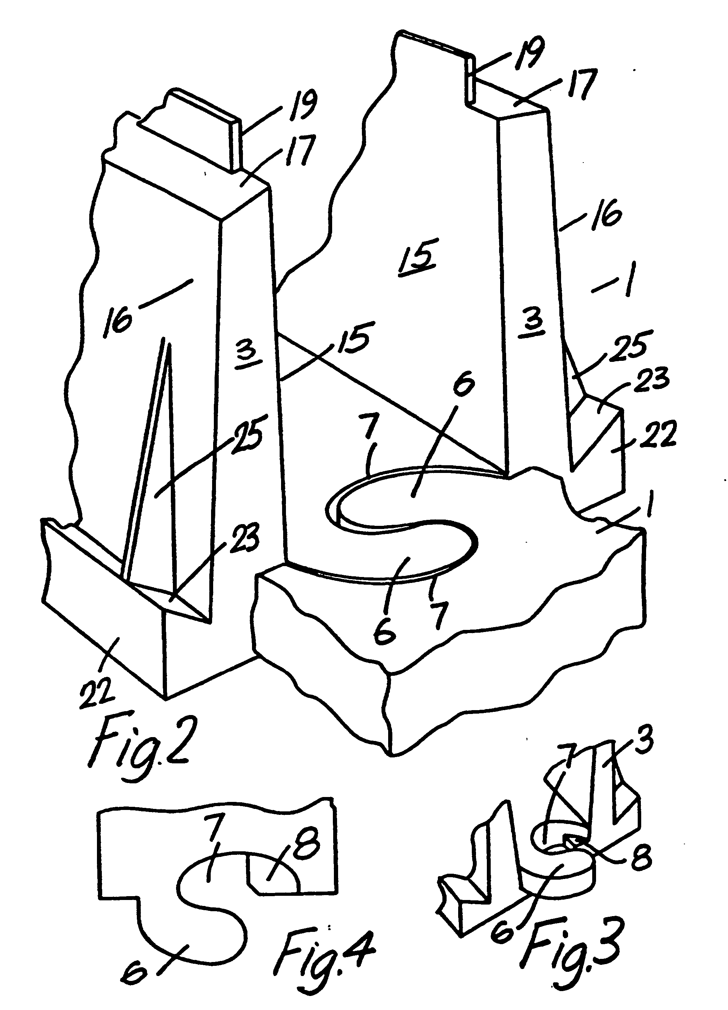

In this case, the interlocking device 5 comprises a curved finger 6, each finger 6 for hooking engagement with a complementary finger 6 on another duct 1 as shown in Fig. 2. A curved slot 7 behind each finger 6 receives another finger 6 for hooking engagement of the fingers 6 as shown in Fig. 2. To prevent relative vertical movement between a pair of interlocked ducts 1, a tongue 8 is associated with each finger 6. The tongue 8 is spaced-apart from the finger 6 within the slot 7 and vertically displaced below the finger 6 so that when a pair of fingers 6 interlock, a tongue 8 associated with one of the fingers 6 engages beneath the other finger 6. This advantageously resists any vertical displacement of a duct 1 relative to an adjacent interlocked duct thus preventing a trip hazard. The interlocking device 5 allows semi-automatic and automatic installation of ducts 1. Further, the design of the interlocking device 5 is such that it allows 3° movement side to side. This advantageously facilitates gently curving a run of ducts 1 around a bend for example.

Each side wall 3 is of hollow construction comprising an inner wall 15 and an outer wall 16 spaced-apart from the inner wall 15. Internal ribs extend between the inner and outer walls 15, 16. Each side wall 3 is open at its lower end. A shoulder 17 extends between an upper end of the inner and outer walls 15, 16. It will be noted that the shoulder 17 is sloped outwardly and downwardly between the inner wall 15 and the outer wall 16 for water run-off. Upstanding flanges 19 form an extension of the inner walls 15 for positive location of a cover 20 on the shoulders 17 to close the duct 1.

An outwardly extending shoe 22 is provided at a lower end of each side wall 3. Each shoe 22 has an upper surface 23 which slopes upwardly and outwardly of the side wall 3 to facilitate keying the duct 1 into a foundation material, particularly where the foundation material is fine soil. External ribs 25 are also provided spaced-apart along each outer wall 16 extending upwardly from the shoe 22 to assist in firmly bedding the duct 1 in a foundation material.

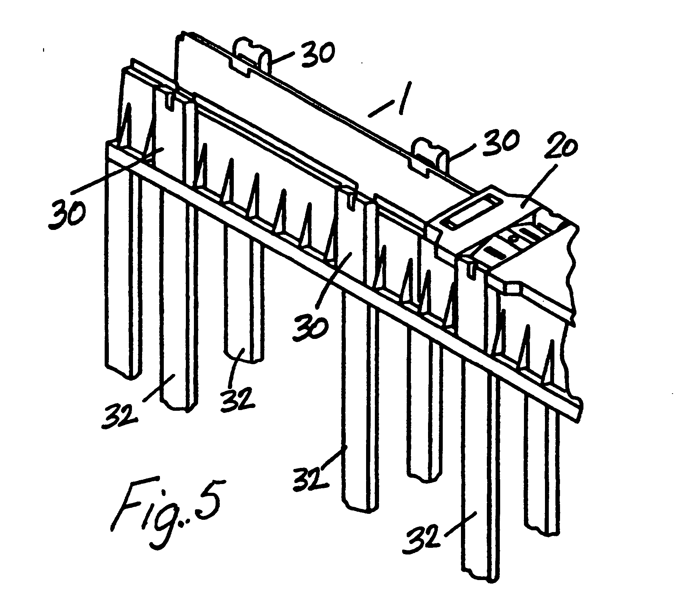

A pair of vertically disposed housings 30 are provided spaced-apart on an outside of each side wall 3. Each housing 30 forms a downwardly open socket for mounting the duct 1 on support posts 32 if desired as shown in Fig. 5. A slot 34 is provided adjacent an upper end of each housing 30 for engagement by a clip, if desired, to hang the duct 1 in tunnels for example. It will be noted that each housing 30 projects above the outer wall 16 to provide with the flanges 19 for positive location of the cover 20 on the duct 1. Slots 36 are provided at an upper end of each housing 30 for engagement with hinge pins 37 on the cover 20 to allow hinging of the cover 20 on either side wall 3, if desired.

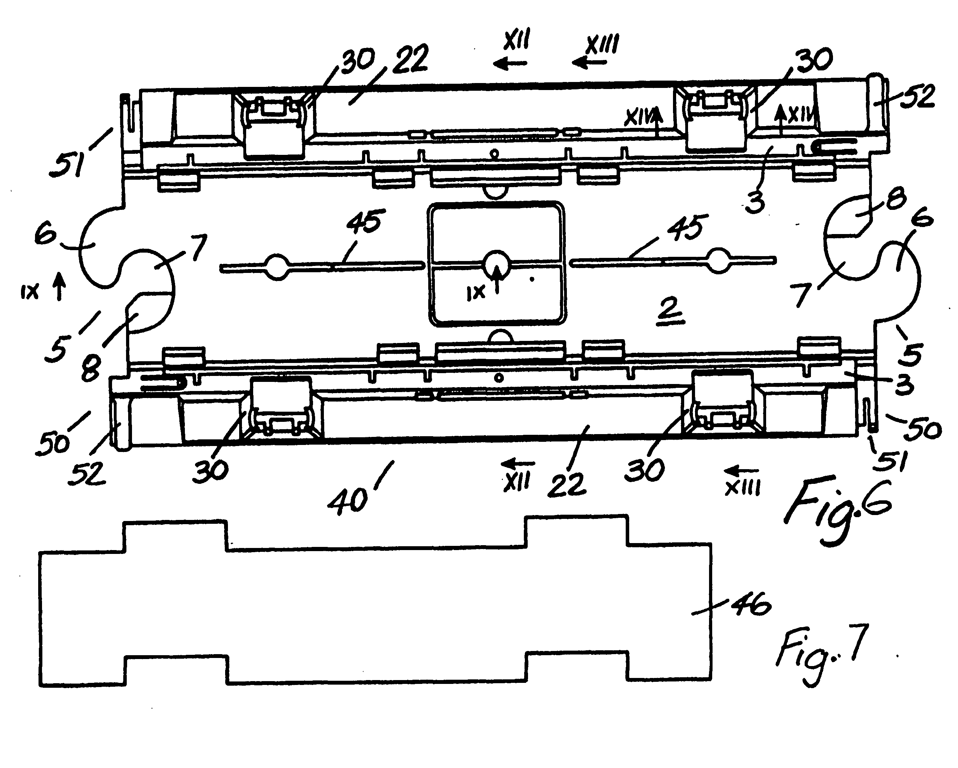

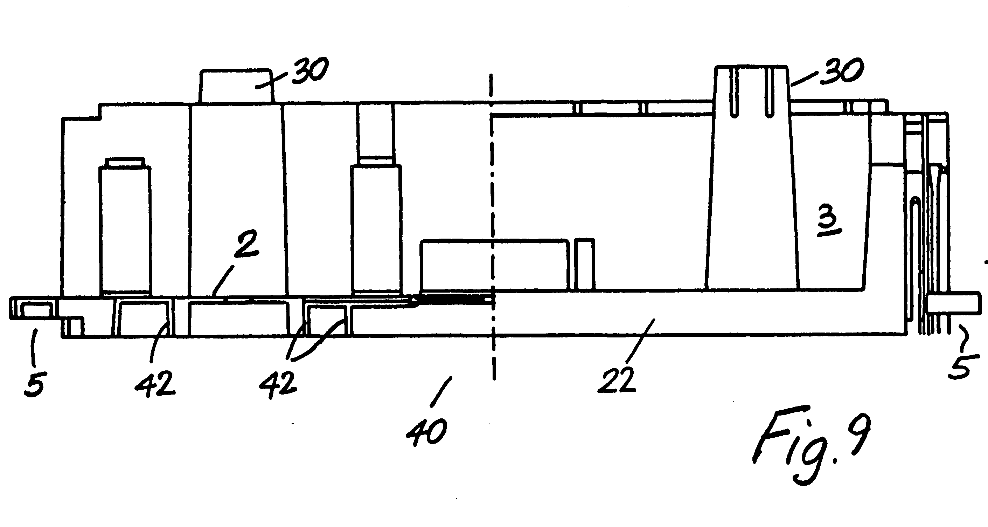

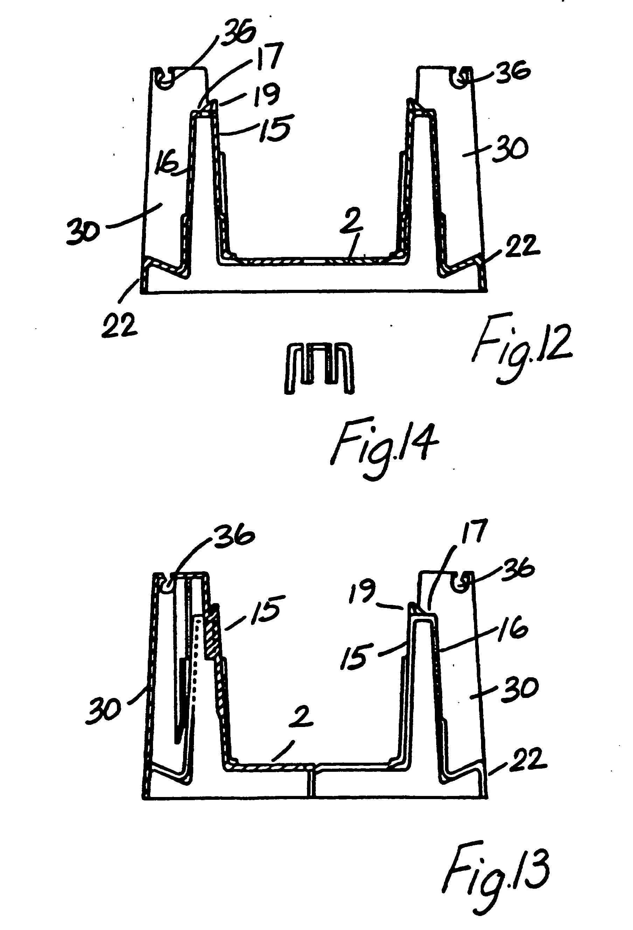

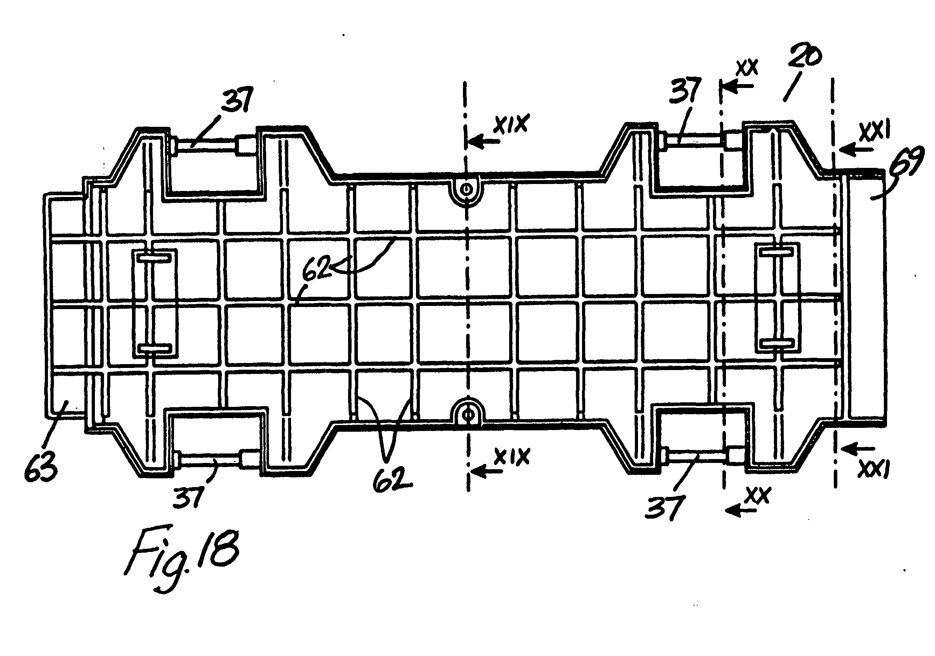

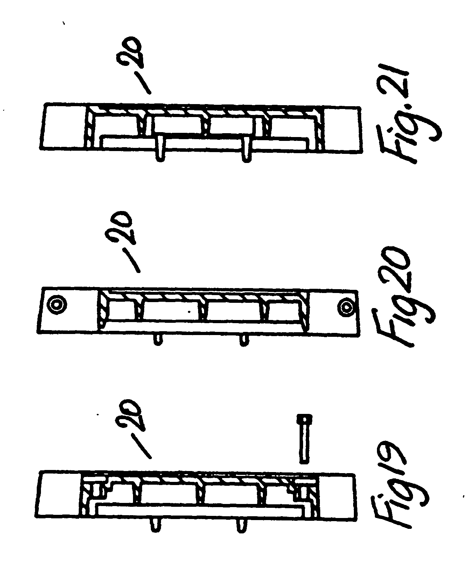

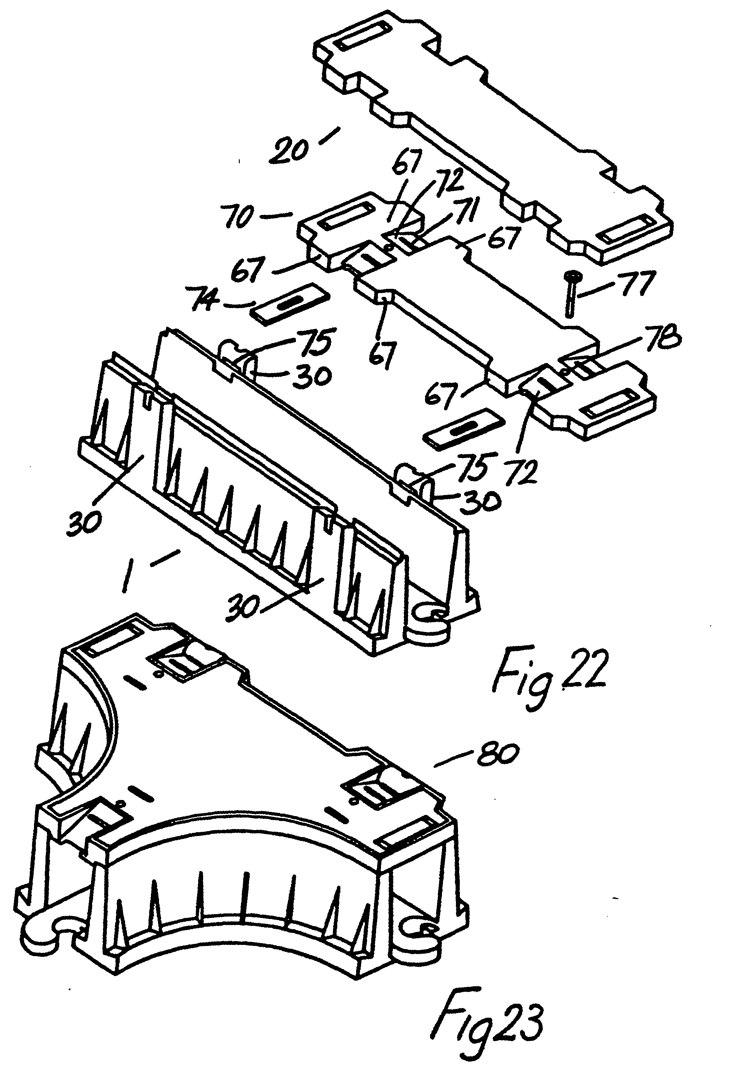

Referring now to Figs. 6 to 21 there is shown another cable duct 40 which is largely similar to the cable duct previously described with reference to Figs. 1 to 5 and like parts are assigned the same reference numerals.

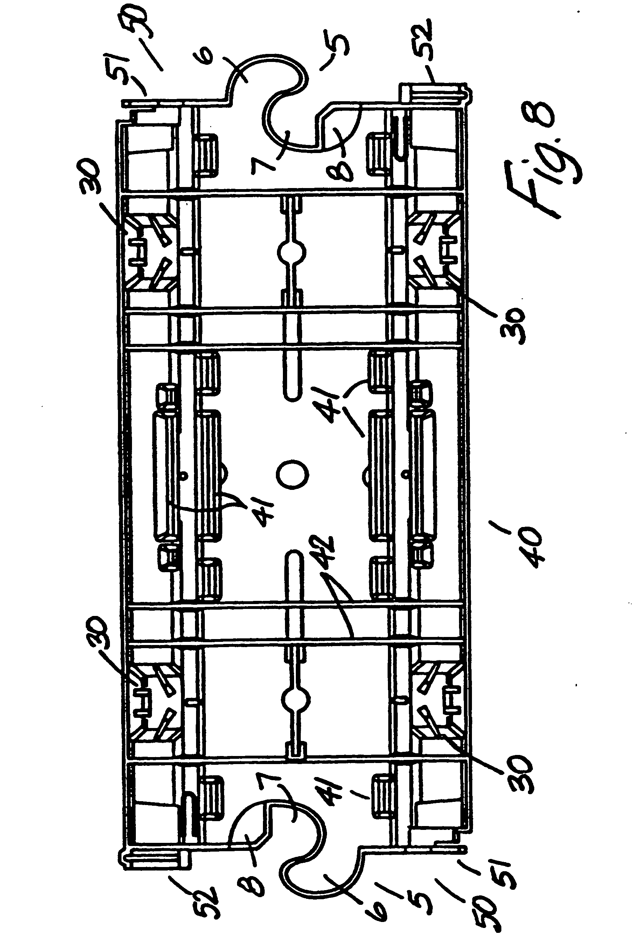

A number of knock-out panels 41 (Fig. 8) are provided in the side walls 3 and base 2 to allow cable entry and exit.

Referring to Fig. 8, a number of upstanding ribs 42 are provided beneath the base 2 extending between opposite sides of the duct 1 to provide strength and, as can be seen in Fig. 8, the underside of the duct 1 is of generally box section. Advantageously, the box section and ribbing allows the duct to bite into track-side ballast and soils. Further, the ribbing allows the mould for forming the duct 1 to readily and quickly fill during the moulding process.

Central slots 45 (Fig. 6) are provided in the base 2 for reception of an upstanding divider panel 46 and to allow drainage.

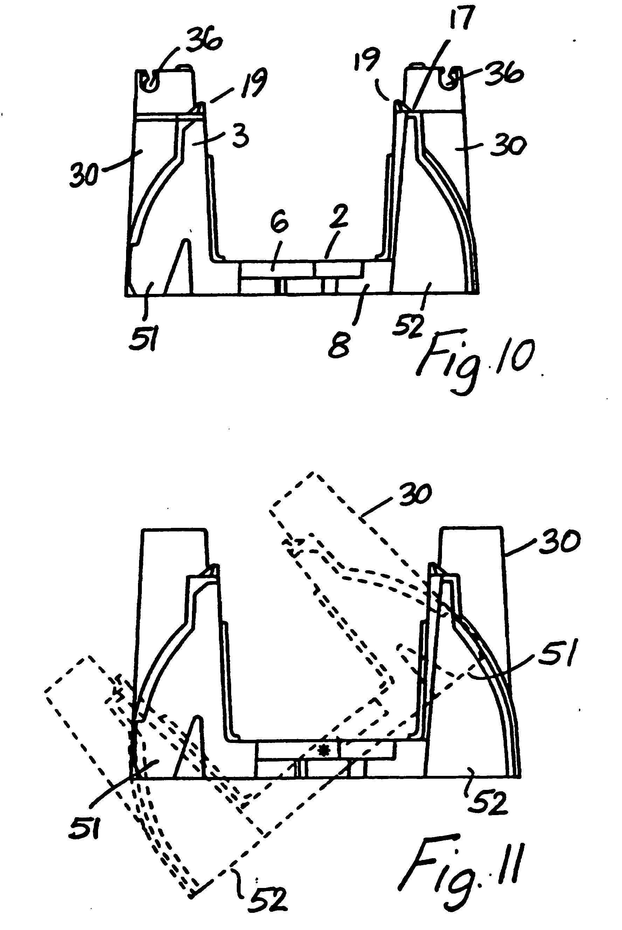

Expansion means 50 is provided at each end of the duct to accommodate longitudinal expansion and contraction of the duct comprising a curved flange 51 on one side and an associated curved housing 52 on the other side. As shown in Fig. 11 a pair of ducts 40 rotatably engage to interlock associated flanges 51 and housings 52 of adjacent ducts 40. The expansion means 50 allows up to 6 mm longitudinal expansion of the duct to be absorbed.

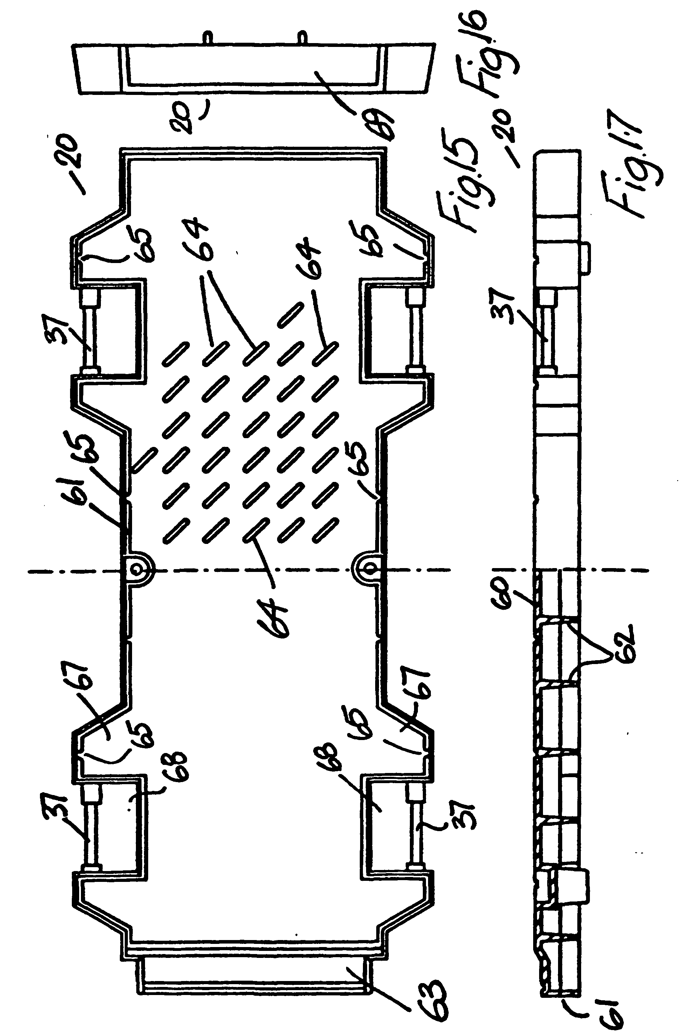

Referring to Figs. 15 to 21, the cover 20 is shown. The cover 20 has a generally flat top 60 with a peripheral rim 61 which projects slightly above the top 60 and extends downwardly of the top 60. Ribs 62 extend downwardly from an inner surface of the top 60 within the rim 61. These ribs 62 ensure high strength and loading capability and ease the flow of material within the mould during the moulding process for forming the cover 20. The top 60 is provided with a number of upstanding spaced-apart projections 64 which provide an anti-slip surface. A plurality of water drainage slots 65 are provided in the rim 61 to prevent water or frost build-up on the cover which would provide a slip hazard. The hinge pins 37 are mounted between projections 67 at each side of the cover 20, each pair of projections 67 defining a slot 68 which locates with an upper end of the housings 30 on the duct side walls 3. Expansion means for the cover 20 comprises an outwardly projecting tongue 63 at one end of the cover 20 and an associated socket 69 at the opposite end of the cover 20. On interlocked ducts the tongues 63 and sockets 69 of adjacent covers 20 overlap to prevent ingress of dirt.

Referring to Fig. 22, either a standard cover 20 or a locking cover 70 may be provided for the ducts 1,40. The locking cover 70 has a slot 71 extending through a neck portion 72 between the projections 67 for reception of a locking plate 74, outer ends of which engage complementary slots 75 at an upper end of the housing 30 on the duct 1,40. Locking bolts 77 extend through associated holes 78 in the neck portion 72 to engage the locking plates 74 to secure the cover 70 on the duct 1,40.

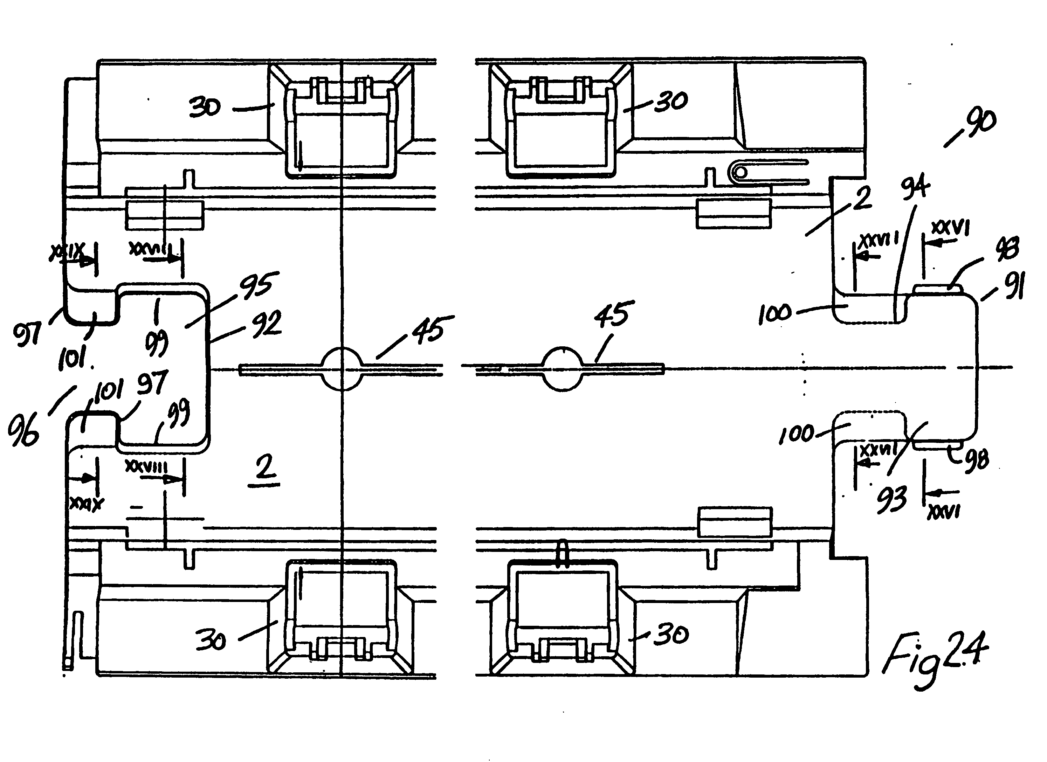

Referring to Fig. 23, a T-junction 80 of similar construction to the duct 1,40 is shown which allows various bending radii of telecommunications and fibre optic cables to be accommodated.

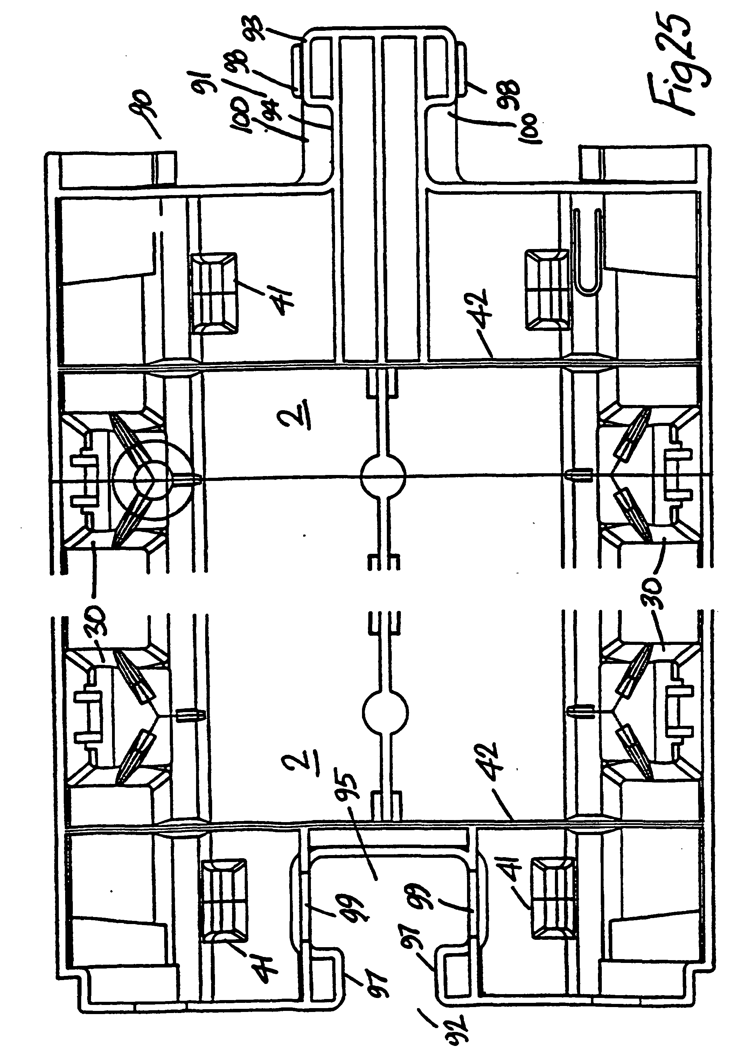

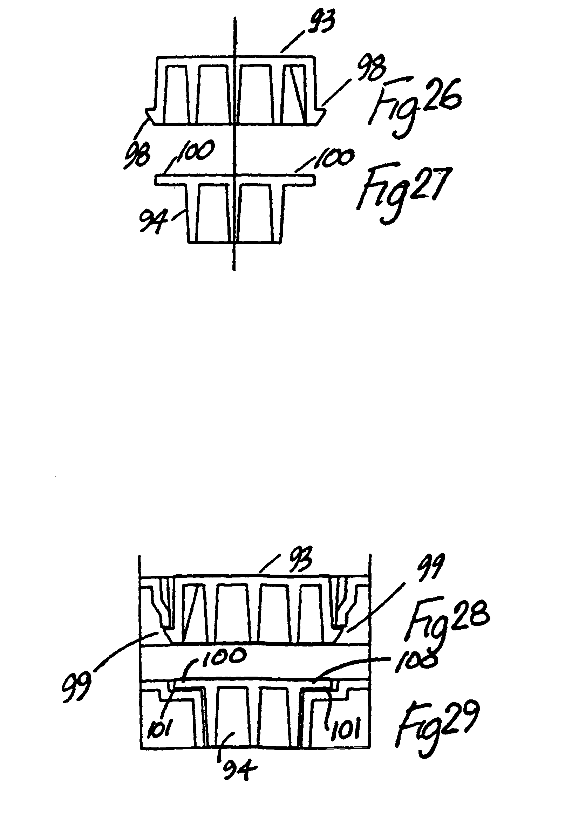

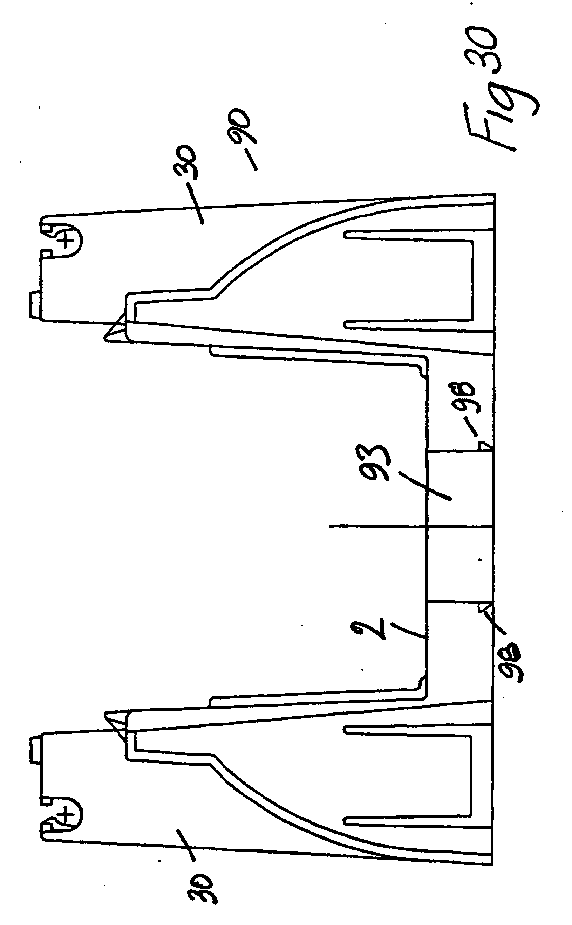

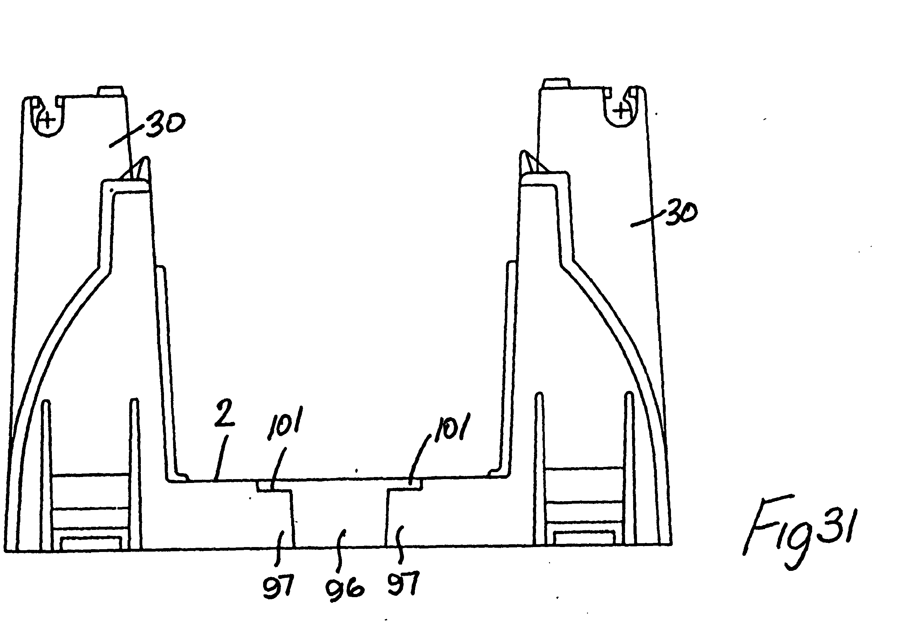

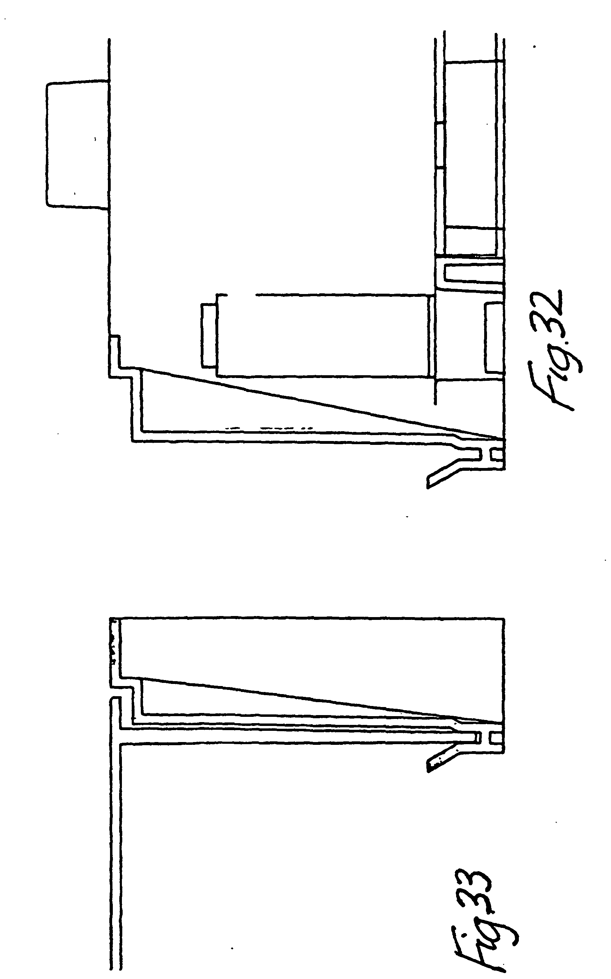

Referring now to Figs. 24 to 33, there is illustrated another duct indicated generally by the reference numeral 90. This duct 90 is largely similar to the ducts previously described, and like parts are assigned the same reference numerals. In this case, the interlocking means comprises a male connector 91 at one end of the duct 90 and a complementary female receiver 92 at the opposite end of the duct 90. The male connector 91 has a bulbous head 93. A narrowed neck portion 94 connects the bulbous head 93 to the base 2. The female receiver 92 comprises a re-entrant slot having an inner portion 95 for reception of the bulbous head 93 and a narrowed mouth 96 defined by pillars 97 which engage behind the bulbous head 93 with the neck 94. Thus, a pair of ducts 90 can be interlocked by engaging the bulbous head 93 of one duct 90 within the enlarged inner portion 95 of the female receiver 92. The width of the bulbous head 93 is somewhat smaller than the depth of the inner portion 93 and the neck 94 is somewhat deeper than the pillars 97 to allow for expansion and contraction of the ducts.

Complementary inter-engagable formations are provided on the male connector 91 and the female receiver 92 to prevent relative vertical displacement of a pair of interconnected ducts 90. In this case, the formations comprise a pair of outwardly extending lugs 98 on opposite sides of the bulbous head 93 at the bottom of the bulbous head 93. These lugs 98 are engagable with associated slots 99 provided at each side of the inner portion 95 of the female receiver 92. In addition, wings 100 are provided at an upper end of the neck 94 for engagement with associated stepped grooves 101 at an upper end of each pillar 97.

In use, a plurality of the ducts 1, 40, 90 can be laid end to end alongside a track, the ducts interlocking to form a continuous channel for cables. The ducts in 1, 40, 90 can be buried in track-side ballast, the interlocking devices 5 preventing unauthorised dismantling of the channel formed by the ducts 1,40, 90 by vandals.

It will be appreciated that any suitable locking means may be provided for releasably locking the cover on the duct.

The ducts may be also use for housing pipework or the like.

The invention is not limited to the embodiments hereinbefore described which may be varied in both construction and detail within the scope of the appended claims.

## Claims

1. A cable duct (40) having a base (2) with upstanding side walls (3) at opposite sides of the base (2) forming with the base (2) an open ended channel for reception of cables, and means (5) at each end of the duct (40) for interlocking the duct (40) with another duct (40) end to end to form an extended channel for cables or the like, **characterised in that** expansion means (50) is provided to facilitate longitudinal expansion of adjacent ducts (40) when interlocked end to end, the expansion means including complementary inter-engagable formations (51, 52) at each end of the duct (40), the associated formations (51, 52) on a pair of ducts (40) overlapping upon interlocking of said pair of ducts (40) to prevent ingress of material into the ducts (40).

2. A cable duct (40) as claimed in claim 1 wherein means (6, 8) is provided to prevent relative vertical movement between a pair of interlocked ducts.

3. A cable duct (40) as claimed in any preceding claim wherein the expansion means (50) comprises complimentary inter-engagable formations (51, 52) at each end of the duct (40), the formations (51, 52) projecting outwardly of at least one end of the duct (40) so that the associated formations on a pair of ducts (40) overlap upon interlocking of said ducts (40) to prevent ingress of material to the ducts (40), a cover (20) for the duct (40) also being provided with overlapping expansion formations at each end of the cover (20) for overlapping engagement with adjacent covers (20).

4. A cable duct (40) as claimed in any preceding claim wherein said expansion means (50) comprises at each end of the duct a curved flange (51) on one side wall (3) and an associated curved housing (52) on the other side wall (3), the flange (51) of one duct (40) being rotatably engagable with the housing (52) on an adjacent duct (40) when interlocking the ducts (40).

5. A cable duct (40) as claimed in any preceding claim wherein mounting means (30) is provided on the duct (40) for mounting the duct (40) on one or more support posts (32).

6. A cable duct (40) as claimed in any preceding claim wherein an outwardly extending shoe (22) is provided at a lower end of each side wall (3) for keying the duct (40) into a foundation material, an upper face of the shoe (22) sloping upwardly and outwardly from the side wall (3).

7. A cable duct (40) as claimed in any preceding claim wherein the duct interlocking means is of two part construction comprising a male connector (91) which is releasably engagable with a complementary female receiver (92), one of said parts (91, 92) being provided at each end of the duct (90).

8. A cable duct (40) as claimed in any preceding claim wherein the interlocking means (5) comprises a curved finger (6) at each end of the duct (40), each finger (6) for hooking engagement with a complementary finger (6) on another duct (40).

9. A cable duct (40) as claimed in claim 8 wherein the means to prevent relative vertical movement between a pair of interlocked ducts comprises a tongue (8) associated with each finger (6), the tongue (8) spaced-apart from the finger (6) and vertically displaced relative to the finger (6) so that when a pair of fingers (6) interlock a tongue (8) associated with one of the fingers (6) engages beneath the other finger (8).

10. A cable duct (90) as claimed in claim 7 wherein the male part (91) comprises a bulbous head (93) connected to the base (2) by a narrowed neck (94) and the female receiver (92) comprises a re-entrant slot (95) in the base (2).

11. A cable duct as claimed in any preceding claim wherein the base (2) has a water drain channel (45) in a top surface of the base (2).

12. A cable duct as claimed in any preceding claim wherein a shoulder (17) is formed at a top end of each side wall (3) for reception of a cover (20) engagable between the side walls (3) to close the duct, the shoulder (17) having an outwardly and downwardly sloping upper surface to facilitate water run-off.

13. A cable duct as claimed in claim 12 wherein a hinge mount (36) is formed at an upper end of one or both side walls (3) for hingedly mounting the cover (20) on the side walls (3).

14. A cable duct as claimed in claim 12 or 13 wherein one or more water drainage slots (65) are provided at an edge of a top surface of the cover (20).

15. A cable duct as claimed in any of claims 12 to 14 wherein one or more hinge pins (37) are provided at an edge of the cover (20) for engagement with the hinge mount (36) on the duct.

16. A cable duct as claimed in any of claims 12 to 15 wherein locking means (74, 77) is provided for releasably securing the cover (20) on the duct.

## Patentansprüche

1. Kabelkanal (40) mit einer Basis (2) mit aufrechten Seitenwänden (3) an gegenüberliegenden Seiten der Basis (2), die mit der Basis (2) einen Kanal mit offenem Ende zur Aufnahme von Kabeln bilden, und ein Mittel (5) an jedem Ende des Kanals (40), um den Kanal (40) Ende an Ende in einen anderen Kanal (40) eingreifen zu lassen, um einen verlängerten Kanal für Kabel oder dergleichen zu bilden, **dadurch gekennzeichnet, dass** ein Verlängerungsmittel (50) bereitgestellt ist, um eine Verlängerung in Längsrichtung von benachbarten Kanälen (40) zu ermöglichen, wenn sie Ende an Ende ineinander eingreifen, wobei das Verlängerungsmittel einander ergänzende Strukturen (51, 52), die ineinander eingreifen können, an jedem Ende des Kanals (40) umfasst, wobei sich die zugehörigen Strukturen (51, 52) an einem Paar Kanäle (40) beim Eingreifen des Paars Kanäle (40) überlappen, um das Eindringen von Material in die Kanäle (40) zu verhindern.

2. Kabelkanal (40) nach Anspruch 1, wobei ein Mittel (6, 8) bereitgestellt ist, um eine relative vertikale Bewegung zwischen einem Paar ineinander eingreifender Kanäle zu verhindern.

3. Kabelkanal (40) nach einem der vorhergehenden Ansprüche, wobei das Verlängerungsmittel (50) einander ergänzende Strukturen (51, 52), die ineinander eingreifen können, an jedem Ende des Kanals (40) umfasst, wobei die Strukturen (51, 52) von mindestens einem Ende des Kanals (40) auswärts vorstehen, so dass sich die zugehörigen Strukturen an einem Paar Kanäle (40) beim Einklinken der Kanäle (40) überlappen, um das Eindringen von Material in die Kanäle (40) zu verhindern, wobei eine Abdeckung (20) für den Kanal (40) ebenfalls mit sich überlappenden Verlängerungsstrukturen an jedem Ende der Abdeckung (20) für einen überlappenden Eingriff in benachbarte Abdeckungen (20) versehen ist.

4. Kabelkanal (40) nach einem der vorhergehenden Ansprüche, wobei das Verlängerungsmittel (50) an jedem Ende des Kanals einen gekrümmten Flansch (51) an einer Seitenwand (3) und ein zugehöriges gekrümmtes Gehäuse (52) an der anderen Seitenwand (3) umfasst, wobei der Flansch (51) eines Kanals (40) beim Verriegeln der Kanäle (40) drehbar in das Gehäuse (52) an einem benachbarten Kanal (40) eingreifen kann.

5. Kabelkanal (40) nach einem der vorhergehenden Ansprüche, wobei ein Befestigungsmittel (30) an dem Kanal (40) bereitgestellt ist, um den Kanal (40) an einem oder mehreren Stützpfosten (32) zu befestigen.

6. Kabelkanal (40) nach einem der vorhergehenden Ansprüche, wobei ein sich auswärts erstreckender Schuh (22) an einem unteren Ende jeder Seitenwand (3) bereitgestellt ist, um den Kanal (40) in einem Fundamentmaterial zu verkeilen, wobei eine obere Seite des Schuhs (22) aufwärts und auswärts schräg von der Seitenwand (3) absteht.

7. Kabelkanal (40) nach einem der vorhergehenden Ansprüche, wobei das Kanalverriegelungsmittel eine zweiteilige Konstruktion aufweist, die einen Stecker (91) umfasst, der lösbar mit einer komplementären Buchse (92) in Eingriff gebracht werden kann, wobei eines der Teile (91, 92) an jedem Ende des Kanals (90) bereitgestellt ist.

8. Kabelkanal (40) nach einem der vorhergehenden Ansprüche, wobei das Verriegelungsmittel (5) einen gekrümmten Zapfen (6) an jedem Ende des Kanals (40) umfasst und jeder Zapfen (6) für einen Hakeneingriff in einen komplementären Zapfen (6) an einem anderen Kanal (40) bestimmt ist.

9. Kabelkanal (40) nach Anspruch 8, wobei das Mittel zum Verhindern einer relativen vertikalen Bewegung zwischen einem Paar in Eingriff stehender Kanäle eine Zunge (8) umfasst, die zu jedem Zapfen (6) gehört, wobei die Zunge (8) von dem Zapfen (6) beabstandet und im Verhältnis zu dem Zapfen (6) vertikal verschoben ist, so dass, wenn ein Paar Zapfen (6) ineinander eingreifen, eine Zunge (8), die zu einem der Zapfen (6) gehört, unterhalb des anderen Zapfens (8) eingreift.

10. Kabelkanal (90) nach Anspruch 7, wobei der Stecker (91) einen knolligen Kopf (93) umfasst, der mittels eines verengten Halses (94) mit der Basis (2) verbunden ist, und die Buchse (92) einen Schlitz für ein wiederholtes Einführen (95) in der Basis (2) umfasst.

11. Kabelkanal nach einem der vorhergehenden Ansprüche, wobei die Basis (2) einen Entwässerungskanal (45) in einer oberen Fläche der Basis (2) aufweist.

12. Kabelkanal nach einem der vorhergehenden Ansprüche, wobei eine Schulter (17) an einem oberen Ende jeder Seitenwand (3) gebildet ist, um eine Abdeckung (20) aufzunehmen, die zwischen den Seitenwänden (3) eingreifen kann, um den Kanal zu schließen, wobei die Schulter (17) eine auswärts und abwärts abfallende obere Fläche aufweist, um das Ablaufen von Wasser zu ermöglichen.

13. Kabelkanal nach Anspruch 12, wobei eine Gelenkbefestigung (36) an einem oberen Ende einer oder beider Seitenwände (3) gebildet ist, um die Abdeckung (20) gelenkig an den Seitenwänden (3) zu befestigen.

14. Kabelkanal nach Anspruch 12 oder 13, wobei ein oder mehrere Wasserablaufschlitze (65) an einer Kante einer oberen Fläche der Abdeckung (20) bereitgestellt sind.

15. Kabelkanal nach einem der Ansprüche 12 bis 14, wobei ein oder mehrere Gelenkstifte (37) an einer Kante der Abdeckung (20) bereitgestellt sind, um in die Gelenkbefestigung (36) am Kanal einzugreifen.

16. Kabelkanal nach einem der Ansprüche 12 bis 15, wobei ein Verriegelungsmittel (74, 77) bereitgestellt ist, um die Abdeckung (20) lösbar am Kanal zu befestigen.

## Revendications

1. Caniveau pour câbles (40) ayant une base (2) avec des parois latérales verticales (3) sur les côtés opposés de la base (2) formant avec la base (2) une canalisation à extrémités ouvertes pour la réception de câbles, et un moyen (5) à chaque extrémité du caniveau (40) pour verrouiller le caniveau (40) avec un autre caniveau (40) bout à bout afin de former une canalisation étendue pour des câbles ou des articles similaires, **caractérisé en ce qu'**un moyen de dilatation (50) est prévu pour faciliter la dilatation longitudinale des caniveaux adjacents (40) lorsqu'ils sont verrouillés bout à bout, ce moyen de dilatation comprenant des formations complémentaires pouvant s'engager l'une avec l'autre (51, 52) à chaque extrémité du caniveau (40), les formations associées (51, 52) sur une paire de caniveaux (40) se chevauchant lors du verrouillage de ladite paire de caniveaux (40) afin d'empêcher l'entrée de matière à l'intérieur des caniveaux (40).

2. Caniveau pour câbles (40) tel que revendiqué dans la revendication 1, dans lequel un moyen (6, 8) est prévu pour empêcher le mouvement vertical relatif entre une paire de caniveaux verrouillés.

3. Caniveau pour câbles (40) tel que revendiqué dans l'une quelconque des revendications précédentes, dans lequel le moyen de dilatation (50) comporte des formations complémentaires pouvant s'engager l'une avec l'autre (51, 52) à chaque extrémité du caniveau (40), ces formations (51, 52) faisant saillie vers l'extérieur d'au moins une extrémité du caniveau (40) de façon à ce que les formations associées sur une paire de caniveaux (40) se chevauchent lors du verrouillage desdits caniveaux (40) afin d'empêcher l'entrée de matière dans les caniveaux (40), un couvercle (20) pour le caniveau (40) étant également prévu avec des formations de dilatation se chevauchant à chaque extrémité du couvercle (20) pour s'engager avec chevauchement avec les couvercles adjacents (20).

4. Caniveau pour câbles (40) tel que revendiqué dans l'une quelconque des revendications précédentes, dans lequel ledit moyen de dilatation (50) comporte à chaque extrémité du caniveau une bride courbe (51) sur une paroi latérale (3) et un logement courbe associé (52) sur l'autre paroi latérale (3), la bride (51) d'un caniveau (40) pouvant être engagé par rotation avec le logement (52) sur un caniveau adjacent (40) lors du verrouillage des caniveaux (40).

5. Caniveau pour câbles (40) tel que revendiqué dans l'une quelconque des revendications précédentes, dans lequel un moyen de montage (30) est prévu sur le caniveau (40) pour monter le caniveau (40) sur un ou plusieurs montants de support (32).

6. Caniveau pour câbles (40) tel que revendiqué dans l'une quelconque des revendications précédentes, dans lequel un sabot s'étendant vers l'extérieur (22) est prévu à une extrémité inférieure de chaque paroi latérale (3) pour caler le caniveau (40) dans un matériau de fondation, une face supérieure du sabot (22) étant inclinée vers le haut et vers l'extérieur depuis la paroi latérale (3).

7. Caniveau pour câbles (40) tel que revendiqué dans l'une quelconque des revendications précédentes, dans lequel le moyen de verrouillage du caniveau est une construction en deux parties comprenant un connecteur mâle (91) qui peut être engagé, de manière déblocable, avec un récepteur femelle complémentaire (92), une desdites pièces (91, 92) étant prévue à chaque extrémité du caniveau (90).

8. Caniveau pour câbles (40) tel que revendiqué dans l'une quelconque des revendications précédentes, dans lequel le moyen de verrouillage (5) comporte un doigt courbe (6) à chaque extrémité du caniveau (40), chaque doigt (6) étant destiné à être engagé, par accrochage, avec un doigt complémentaire (6) sur un autre caniveau (40).

9. Caniveau pour câbles (40) tel que revendiqué dans la revendication 8, dans lequel le moyen pour empêcher le mouvement vertical relatif entre une paire de caniveaux verrouillés comprend une languette (8) associée à chaque doigt (6), cette languette (8) étant écartée du doigt (6) et déplacée verticalement par rapport au doigt (6) de telle sorte que, lorsqu'une paire de doigts (6) se verrouillent, une languette (8) associée à un des doigts (6) s'engage en dessous de l'autre doigt (8).

10. Caniveau pour câbles (90) tel que revendiqué dans la revendication 7, dans lequel la pièce mâle (91) comporte une tête renflée (93) rattachée à la base (2) par un col plus étroit (94) et le récepteur femelle (92) comporte une encoche rentrante (95) dans la base (2).

11. Caniveau pour câbles tel que revendiqué dans l'une quelconque des revendications précédentes, dans lequel la base (2) a une voie d'écoulement d'eau (45) dans une surface supérieure de la base (2).

12. Caniveau pour câbles tel que revendiqué dans l'une quelconque des revendications précédentes, dans lequel un épaulement (17) est formé à l'extrémité supérieure de chaque paroi latérale (3) pour la réception d'un couvercle (20) pouvant être engagé entre les parois latérales (3) pour fermer le caniveau, cet épaulement (17) ayant une surface supérieure inclinée vers l'extérieur et vers le bas afin de faciliter le ruissellement de l'eau.

13. Caniveau pour câbles tel que revendiqué dans la revendication 12 dans lequel un support de montage à articulation (36) est formé à une extrémité supérieure d'une ou des deux des parois latérales (3) pour monter de manière articulée le couvercle (20) sur les parois latérales (3).

14. Caniveau pour câbles tel que revendiqué dans la revendication 12 ou 13, dans lequel une ou plusieurs encoches d'écoulement d'eau (65) sont prévues à un bord d'une surface supérieure du couvercle (20).

15. Caniveau pour câbles tel que revendiqué dans l'une quelconque des revendications 12 à 14, dans lequel un ou plusieurs axes d'articulation (37) sont prévus à un bord du couvercle (20) pour s'engager avec le support de montage à articulation (36) sur le caniveau.

16. Caniveau pour câbles tel que revendiqué dans l'une quelconque des revendications 12 à 15, dans lequel un moyen de blocage (74, 77) est prévu pour fixer le couvercle (20), de manière déblocable, sur le caniveau.
